# EUROPEAN PATENT APPLICATION

(11) **EP 4 789 755 A1**
(43) Date of publication of application: **12.08.2026**
(21) Application number: 25382094.8
(22) Date of filing: 06.02.2025
(51) Int. Cl.: B01D 67/00, B01D 71/16, B01D 71/56, B01D 71/68

(54) **FUNCTIONAL MEMBRANE, PROCESS FOR MANUFACTURING SAID MEMBRANE AND PROCESS FOR SELECTIVE SEPARATION OF ANALYTES USING SAID MEMBRANE**

(71) Applicant: Regenera Levante, S.L., 30.007 Murcia (ES)
(72) Inventor: Fabregat Tena, Víctor, 30.007 Murcia (ES); Gallego Martínez, Francisco David, 30.007 Murcia (ES)
(74) Representative: Clarke, Modet y Cía., S.L.

(57) **Abstract**

The present invention relates to a functional membrane functional membrane for selective separation of analytes, characterised in that it comprises a polymer matrix functionalized with an organic compound selected from the group consisting of acrylates, methacrylates, acrylamide, methacrylamide, styrenes, amines, alkyl halides, aminosilanes and amides. The invention also relates to a process for manufacturing said membrane and the process for selective separation of analytes using said membrane.

## Description

### TECHNICAL FIELD

The present invention relates to the water treatment. More specifically, the present invention relates to a functional membrane for selective separation of analytes, preferably metal ions. The invention also relates to a process for manufacturing said membrane and the process for selective separation of analytes using said membrane.

### BACKGROUND OF THE INVENTION

With the current problems of scarcity of quality water, desalination is presented as an appropriate and widespread technique for producing fresh water from seawater or brackish water. Most of the world's desalinated water is produced by reverse osmosis (RO), a process that produces large quantities of reject brine, which in most cases is discharged into the sea, causing environmental problems. In addition, the high cost of desalination is another major drawback, so the recovery of brine by-products with market potential is a necessary practice to achieve the economic viability of the process, a process also known as "brine mining" [1].

Seawater, and therefore reverse osmosis brine, contains numerous ions and salts that can be recovered, including elements of high market value such as lithium (Li), rubidium (Rb), cesium (Cs) and germanium (Ge), among others, due to their application in cutting-edge technologies. In addition, due to the supply crisis caused by different factors, these metals are generally listed as critical materials.

The total amount of metals contained in seawater is extremely higher than those found in terrestrial reserves. However, the main challenge for the extraction of these metals from seawater or brine lies in the low concentration in which they are found, which adopts values of 0,17, 0,12 and <0,001 ppm in seawater for Li⁺ [2], Rb⁺ and Cs⁺, respectively. Considering the concentration of the elements in seawater brine and their market value, the extraction of Li⁺, Rb⁺ and Cs⁺, among others, is economically viable [3, 4].

Various techniques have been described in recent years for the recovery of metals from seawater and brine, including membrane technologies, adsorption, precipitation, solvent extraction and electrochemical processes.

Membrane technologies have the advantages of high energy efficiency, scalability, and easy operation in a continuous process. For example, CN117504618A discloses an application of an asymmetric MXene membrane in selective ion separation in seawater. MXene is a family of 2D materials, known as nanosheets of transition metal carbides or nitrides. When the asymmetric MXene membrane of this invention is used for selective ion separation, the membrane has excellent separation selectivity, ultrahigh permeability and relatively high-water permeability on target ions such as Li⁺, Na⁺, K⁺, Rb⁺ and Cs⁺, and has a good application prospect in the fields of resource utilization of salt lakes and recovery of high value-added ions in seawater.

CN118851365A discloses a preparation method of a functional carbon membrane and application of the functional carbon membrane in cesium ion separation. The functional carbon membrane is used for deep treatment of Cs⁺-containing wastewater, integrated coupling of membrane adsorption and electrochemical adsorption functions. On one hand, the adsorption rate of cesium ions is improved, the desorption regeneration process of the carbon membrane is simplified, and on the other hand, real-time separation of purified water can be realized, so that the functional carbon membrane has a wide application prospect.

On the other hand, nanofiltration (NF) is presented as an environmentally friendly, easy-to-operate and low-cost technique, which allows the separation of monovalent and multivalent ions efficiently. NF is a membrane liquid-separation technology sharing many characteristics with reverse osmosis (RO). However, unlike RO, which has high rejection of virtually all dissolved solutes, NF provides high rejection of multivalent ions and low rejection of monovalent ions.

An example of NF membrane is described in WO2024115957A1. WO2024115957A1 discloses an anti-fouling membrane to effectively remove heavy metals from water. The membrane is a funcionalized polyethersulfone membrane wherein the functional compound is a curcumin mesoporous kit-6. The functionalisation of the membrane aims to increase the ability of the polyethersulfone membrane to effectively remove heavy metals, such as mercury, cadmium, arsenic, chromium, zinc, nickel, copper, and lead, by influencing hydrophilicity, surface charge, pore size, porosity and the introduction of absorbent functional groups.

US2014319044A1 disclose a membrane for reverse osmosis, forward osmosis, or ultrafiltration which can be used in devices or water purification methods, where the surface of the membrane is functionalized with nanoparticles. The nanoparticles closest to the membrane surface are covalently bonded to the membrane surface. Examples of nanoparticles are metal nanoparticles, metal oxide nanoparticles, inorganic oxide nanoparticles, or combinations thereof.

WO2023081448A1 discloses membranes for the selective extraction of lithium ions from a brine solution. The membrane comprises a polymer matrix comprising an anion exchange polymer (e.g. methacrylamide, polyester, poly(vinyl chloride), poly(ethylene), poly(propylene), polystyrene) and a metal compound dispersed in the polymer matrix which is HₐLi_{b}X_{c}O_{d}, where a is from 1 to 1.5, b is from 0 to 0.1, c is from 1 to 2, d is from 4 to 4.5, and X comprises manganese or titanium.

However, existing membranes are too specific and many of the structures have metals in them, making them more expensive and complicated to manufacture.

### DESCRIPTION OF THE INVENTION

The present invention focuses on the development of a cost-effective family of functional membranes with an extended application range, addressing the limitation of specificity in existing methods. The invention also relates to an alternative synthesis approach that is straightforward, metal-free in the polymeric structure, and ensures enhanced membrane stability.

The inventors of the present invention, after extensive and exhaustive research, have surprisingly found that the selective functionalisation of polymer matrices with organic compounds, exploiting the chemical affinity of the incorporated compounds with specific functional groups, provides a more cost-effective and potentially more efficient solution, allowing high selectivity with lower production and operating costs.

In addition, functionalisation has been shown to overcome common limitations of current techniques such as fouling and membrane stability by controlling the porosity of the network through the degree of cross-linking, thus allowing fine tuning of separation properties.

In a first aspect, the present invention relates to a functional membrane characterised in that it comprises a polymer matrix functionalized with an organic compound selected from the group consisting of acrylates, methacrylates, acrylamide, methacrylamide, styrenes, amines, alkyl halides, aminosilanes and amides.

Preferably, the polymer matrix is selected from the group consisting of polyamide, polyethersulphone and cellulose acetate.

Preferably, the organic compound is selected from the group consisting of 3-(acrylamidopropyl) trimethylammonium chloride, 2-hydroxyethylmethacrylate methacrylate, 2-acrylamido-2-methyl-1-propensulfonate, 3-(trimethoxysilyl) propyl methacrylate, N-hydroxyethylacrylamide, 2-acrylamido-2-methyl-2-methylpropanesulfonic acid, 2-(dimethylamino)ethyl 2-(dimethylamino)methacrylate, 2-hydroxyethyl acrylate, N,N dimethylaminoethyl acrylate, N-isopropylacrylamide, N-(3-(3-(dimethylamino)propyl)methacrylamide, aminoethylmethacrylate, chloromethylstyrene, sodium styrene sulphonate, ethylenediamine, N-propylethylenediamine, tris(2-aminoethyl)amine, p-anisidine, 4-aminoveratrol, methyl 4-amino-2-methoxybenzoate, 2-bromo-5-nitroaniline, methyl 2-amino-3,5-dibromobenzoate, 2,6-dinitroaniline, 2,4-dibromo-6-fluoroaniline, 4-bromo-2-methoxyaniline, ethanolamine, 4-aminobenzoate, 4-(2-(2-aminoethyl)benzenesulfonamide, dibromoethane, dichloroethane, aminopropyltrimethoxysilane, aminopropyltrimethoxysilane, aminopropyltriethoxysilane, N-(2-aminoethyl)-3-aminopropyltrimethoxysilane, N-[3-(trimethoxysilyl)propyl]aniline, N,N'-dimethylacetamide and N,N-diethylacetamide.

In a second aspect, the present invention relates to a process for manufacturing a functional membrane according to the first aspect of the present invention, comprising the following steps:
a) preparing a mixture of a solvent and an organic compound selected from the group consisting of acrylates, methacrylates, acrylamide, methacrylamide, styrenes, amines, alkyl halides, aminosilanes and amides;
b) providing a polymer matrix and spraying the mixture from step a) into the surface of the polymer matrix; and
c) subjecting the product obtained in step b) to a nucleophilic substitution reaction or a radical polymerisation reaction at a temperature between 50°C and 80°C for 2 to 24 hours to obtain a functionalised membrane.

The temperature range used is optimal as 50°C is the minimum temperature at which the reaction takes place and 80°C is the maximum temperature the base membrane can tolerate before losing its properties such as porosity or permeability.

In an embodiment, if the reaction of step c) is a radical polymerisation reaction, the mixture of step a) further comprises an initiator. Preferably, the initiator is azobisisobutyronitrile.

Preferably, the polymer matrix is selected from the group consisting of polyamide, polyethersulphone and cellulose acetate.

Preferably, the organic compound is selected from the group consisting of 3-(acrylamidopropyl) trimethylammonium chloride, 2-hydroxyethylmethacrylate methacrylate, 2-acrylamido-2-methyl-1-propensulfonate, 3-(trimethoxysilyl) propyl methacrylate, N-hydroxyethylacrylamide, 2-acrylamido-2-methyl-2-methylpropanesulfonic acid, 2-(dimethylamino)ethyl 2-(dimethylamino)methacrylate, 2-hydroxyethyl acrylate, N,N dimethylaminoethyl acrylate, N-isopropylacrylamide, N-(3-(3-(dimethylamino)propyl)methacrylamide, aminoethylmethacrylate, chloromethylstyrene, sodium styrene sulphonate, ethylenediamine, N-propylethylenediamine, tris(2-aminoethyl)amine, p-anisidine, 4-aminoveratrol, methyl 4-amino-2-methoxybenzoate, 2-bromo-5-nitroaniline, methyl 2-amino-3,5-dibromobenzoate, 2,6-dinitroaniline, 2,4-dibromo-6-fluoroaniline, 4-bromo-2-methoxyaniline, ethanolamine, 4-aminobenzoate, 4-(2-(2-aminoethyl)benzenesulfonamide, dibromoethane, dichloroethane, aminopropyltrimethoxysilane, aminopropyltrimethoxysilane, aminopropyltriethoxysilane, N-(2-aminoethyl)-3-aminopropyltrimethoxysilane, N-[3-(trimethoxysilyl)propyl]aniline, N,N'-dimethylacetamide and N,N-diethylacetamide.

In another embodiment, the solvent: organic compound ratio is from 2:1 to 4:1.

In another embodiment, the nucleophilic substitution reaction of step c) is carried out at a temperature between 50°C to 80°C during 8 to 10 hours.

In another embodiment, the radical polymerisation reaction of step c) is carried out at a temperature between 55°C to 80°C during 2 to 2,5 hours.

In a particular embodiment, when the organic compound is a styrene, the radical polymerisation reaction of step c) is carried out at a temperature between 50°C and 60°C during 24 hours.

In a third aspect, the present invention relates to a process for selective separation of analytes in a fluid, comprising the step of contacting a fluid comprising analytes selected from the group consisting of metals, metal-based compounds and/or metal ions with a membrane according to the first aspect of the present invention.

Preferably, the metal is lithium, germanium, rubidium or cesium.

The fluid can be groundwater, surface water, freshwater, seawater, wastewater, well water, mining water or brackish water.

In the present invention, the term "separation of analytes" refers to two types of separation: permeation or retention. The first type of separation is a selective permeation of the analyte of interest into the permeate (retention of interferents). In contrast, the second type, it is a selective retention of the analyte of interest by the membrane into the concentrate.

In a fourth aspect, the present invention relates to a filtration element, membrane module or filtration system comprising a membrane according to the first aspect of the present invention.

In a final aspect, the present invention relates to the use of a membrane to the first aspect of the present invention for drinking water purification, treatment of industrial or municipal wastewater, in the desalination of sea or brackish water purification.

### EXAMPLES

### Example 1. Process for manufacturing a membrane according to the present invention

A total of 88 different types of corresponding membranes were synthesised in the combination of three polymeric matrices: polyamide, polyethersulphone and cellulose acetate with 16 different compounds with specific functional groups and two polymeric matrices: polyamide, polyethersulphone and cellulose acetate with 20 different compounds with specific functional groups.

Table 1 summarises the reaction conditions for the functionalisation of the three polymeric matrices mentioned above. Table 2 shows which polymer matrices were functionalised for each sample.

The process comprises a first step of preparation of a polymer mixture. First, a quantity of the compound corresponding to the % w/w range given in Table 1 was weighed with respect to the total weight of the polymer matrix. The compound was then dispersed in a vial in the corresponding solvent and in the ratio described in Table 1.

In some samples (samples 1 to 14), a quantity of polymeric reaction initiator 2,2'-azo-bis-isobutyrylnitrile (AIBN) was added at a ratio of 1-1.5% of the total weight of the membrane (considered as the sum of the polymeric matrix and compound). The vial was shaken vigorously at room temperature until complete dissolution.

The cap of the vial was then replaced by an aerosol dispenser system producing spheres between 50 and 100 µm, and the sample was sprayed onto the polymer matrix so that it was distributed as homogeneously as possible. The functionalisation was then carried out through a thermally initiated radical polymerisation reaction or a nucleophilic substitution reaction and it was carried out in an oven for the time and a range of temperature indicated in Table 1.

At the end of the process, the membranes were removed from the oven and characterised.

In a first qualitative characterisation, it was verified that the membranes were intact in terms of folds or breaks, in addition to significant colour changes. A physical characterisation was then carried out using an optical microscope to verify the structural integrity of the membrane. Finally, the functionalised membranes were characterised using FT-IR and FT-Raman spectroscopy techniques to verify the correct introduction of the functional group.

**Table 1. Summary of reaction conditions for the functionalisation of polymeric matrices**

| **Sample N°** | **Organic compound** | **Amount of organic compound (%w/w)** | **Initiator** | **T^{a} (°C)** | **Time (hours)** | **Solvent** | **Solvent :organic compound ratio** |
|---|---|---|---|---|---|---|---|
| 1 | 3-(acrylamido propyl) trimethylam monium chloride | 10-25% | AIBN (1%) | 55- 80 | 2 | MeOH/ Dodecanol (2:1) | 3:1 |
| 2 | 2-hydroxyethy Imethacrylat e methacrylat e | 10-25% | AIBN (1%) | 55 - 80 | 2 | Dodecanol | 3:1 |
| 3 | 2-acrylamido-2-methyl-1-propensulfo nate | 10-25% | AIBN (1%) | 60 - 80 | 2 | MeOH/ Dodecanol (2:1) | 3:1 |
| 4 | 3-(trimethoxys ilyl) propyl methacrylat e | 10-25% | AIBN (1%) | 55 - 80 | 2 | Dodecanol | 3:1 |
| 5 | N-hydroxyethy lacrylamide | 10-25% | AIBN (1%) | 60 - 80 | 2,50 | MeOH | 3:1 |
| 6 | 2-acrylamido-2-methyl-2-methylprop anesulphoni c acid | 10-25% | AIBN (1%) | 55 - 80 | 2 | Dodecanol | 3:1 |
| 7 | 2-(dimethylam ino)ethyl 2-(dimethylam ino)methacr ylate | 10-25% | AIBN (1%) | 55- 80 | 2 | Dodecanol | 3:1 |
| 8 | 2-hydroxyethy I acrylate | 10-25% | AIBN (1%) | 60- 80 | 2 | Dodecanol | 3:1 |
| 9 | N,N dimethylami noethyl acrylate | 10-25% | AIBN (1%) | 60- 80 | 2 | Dodecanol | 3:1 |
| 10 | N-isopropylacr ylamide | 10-25% | AIBN (1%) | 60- 80 | 2,50 | MeOH | 3:1 |
| 11 | N-(3,3-(dimethylam ino)propyl) methacryla mide | 10-25% | AIBN (1%) | 60- 80 | 2,50 | MeOH | 3:1 |
| 12 | aminoethyl methacrylat e | 10-25% | AIBN (1%) | 55- 80 | 2 | Dodecanol | 4:1 |
| 13 | chloromethy lstyrene | 5-20% | AIBN (1,5%) | 50- 60 | 24 | Dodecanol / Toluene (5:1) | 4:1 |
| 14 | sodium styrene sulphonate | 5-20% | AIBN (1,5%) | 50-60 | 24 | Dodecanol / Toluene (5:1) | 2:1 |
| 15 | ethylenedia mine | 10- 50% | - | 50- 60 | 8 | THF | 2:1 |
| 16 | N-propylethyle nediamine | 10- 50% | - | 50- 60 | 8 | THF | 2:1 |
| 17 | tris(2-aminoethyl) amine | 10- 50% | - | 50- 60 | 8 | THF | 2:1 |
| 18 | p-anisidine | 10- 50% | - | 50- 60 | 8 | THF | 2:1 |
| 19 | 4-aminoveratr ol | 10- 50% | - | 50- 60 | 8 | THF | 2:1 |
| 20 | methyl 4-amino-2-methoxyben zoate | 10- 50% | - | 50- 60 | 8 | THF | 2:1 |
| 21 | 2-bromo-5-nitroaniline | 10- 50% | - | 50- 60 | 8 | THF | 2:1 |
| 22 | methyl 2-amino-3,5-dibromoben zoate | 10- 50% | - | 50- 60 | 8 | THF | 2:1 |
| 23 | 2,6-dinitroanilin e | 10- 50% | - | 50- 60 | 8 | THF | 2:1 |
| 24 | 2,4-dibromo-6-fluoroaniline | 10- 50% | - | 50- 60 | 8 | THF | 2:1 |
| 25 | 4-bromo-2-methoxyanil ine | 10- 50% | - | 50- 60 | 8 | THF | 2:1 |
| 26 | ethanolamin e | 10- 50% | - | 50- 60 | 8 | THF | 2:1 |
| 27 | 4-aminobenzo ate | 10- 50% | - | 50- 60 | 8 | THF | 2:1 |
| 28 | 4-((2-aminoethyl) benzenesulf onamide | 10- 50% | - | 50- 60 | 8 | THF | 2:1 |
| 29 | dibromoeth ane | 10- 50% | - | 60- 80 | 10 | MeOH | 2:1 |
| 30 | dichloroetha ne | 10- 50% | - | 60- 80 | 10 | MeOH | 2:1 |
| 31 | aminopropyl trimethoxysi lane | 10- 50% | - | 50- 60 | 8 | THF | 2:1 |
| 32 | aminopropyl triethoxysila ne | 10- 50% | - | 50- 60 | 8 | THF | 2:1 |
| 33 | N-(2-aminoethyl) -3-aminopropyl trimethoxysi lane | 10- 50% | - | 50- 60 | 8 | THF | 2:1 |
| 34 | N-[3-(trimethoxys ilyl)propyl]a niline | 10- 50% | - | 50- 60 | 8 | THF | 2:1 |
| 35 | N,N'-dimethylace tamide | 10- 50% | - | 50- 60 | 8 | MeOH/ THF (1:1) | 2:1 |
| 36 | N,N-diethylaceta mide | 10- 50% | - | 50- 60 | 8 | MeOH/ THF (1:2) | 2:1 |

| | | | | | | | |
|---|---|---|---|---|---|---|---|
| - AIBN= azobisisobutyronitrile. - MeOH= methanol. - THF= tetrahydrofuran. | | | | | | | |

**Table 2. Summary of the polymer matrices that were functionalised for each sample.**

| **Sample N°** | **Polymer Matrix** | | |
|---|---|---|---|
| | **Polyamide** | **Polyethersulphone** | **Cellulose acetate** |
| 1 | x | x | X |
| 2 | X | X | X |
| 3 | X | X | X |
| 4 | X | X | X |
| 5 | X | X | X |
| 6 | x | x | X |
| 7 | X | X | X |
| 8 | X | X | X |
| 9 | X | X | X |
| 10 | X | X | X |
| 11 | X | X | X |
| 12 | X | X | X |
| 13 | X | X | X |
| 14 | X | X | X |
| 15 | X | | X |
| 16 | X | | X |
| 17 | X | | X |
| 18 | X | | X |
| 19 | X | | X |
| 20 | x | | X |
| 21 | x | | X |
| 22 | x | | X |
| 23 | x | | X |
| 24 | x | | X |
| 25 | x | | X |
| 26 | x | | X |
| 27 | x | | X |
| 28 | x | | X |
| 29 | x | X | X |
| 30 | x | X | X |
| 31 | X | | X |
| 32 | x | | X |
| 33 | x | | X |
| 34 | x | | X |
| 35 | x | | X |
| 36 | X | | X |

| | | | |
|---|---|---|---|
| - X= used - Blank= not used | | | |

### Example 2. Study of selective retention of lithium, germanium, cesium and rubidium in a fluid with the membranes of the present invention

In this example, the selective retention of different analytes, specifically lithium, germanium, cesium and rubidium were investigated using each of the membranes prepared in example 1.

The test procedure for each membrane was carried out using a previously characterised saline solution (brine). Brines were selected in which levels (in ppm) of the metals of interest previously described had been identified. The feed solution was pumped at higher pressure than the osmotic pressure into a hermetically sealed membrane support cell with two outlets for the permeate and reject streams. The fluid stream that passes through the membrane is called permeate, while the part of the solution that does not pass through the membrane is called reject or concentrate.

The standard duration of the tests was approximately 60 minutes. The variables recorded in each test includes feed and reject pressure and flow rate, conductivity, pH and temperature in each of the streams (feed, reject and permeate). Every 15 minutes, readings are taken for each of these variables. In addition, samples of each of the streams are taken at t=60 min to analyze by ion chromatography.

In addition to the characterization by ion chromatography, two other parameters were evaluated for the verification of the selectivity of the membranes, these are ion retention and permeate recovery.

Ion retention (%) was calculated from the following expression: ${R}_{i} = \left(1-\frac{{c}_{ip}}{{c}_{i 0}}\right) ∗ 100$ where *c*_{*i*0} and *cᵢₚ* are the concentrations of the ion in the feed and the permeate (mg/L), respectively.

Permeate recovery (%) is the ratio of feed solution that passes through the membrane, and was calculated as follows: ${X}_{p} = \frac{{Q}_{p}}{{Q}_{0}} ∗ 100$ where ***Q*₀** and ***Qₚ*** are the feed and permeate flows (L/h), respectively.

Table 3 shows the results obtained for all synthesized membranes in terms of selectivity for the separation of the analyte of interest. In Table 3, successful results are marked with an 'x'. This means that the results obtained for Ri are greater than 90% and Xp are greater than 75%.

In general, the experiments were carried out with a feed flow in the range 0.5-10 L/h and at pressures between 4 x 10⁵ and 55 x 10⁵ Pa. An increase in pressure implies a reduction in the operating flow.

The results obtained indicate that the membranes are selective to the analytes of interest and allow their selective separation. The trends identified for each analyte are as follows:
Lithium (I): The functional groups with amines and amides, at basic pH, have negative charge density and prevent the passage of most cations, except for the smallest in terms of ionic radius (Li⁺) which in certain conditions of not excessively high pressure can pass to the permeate selectively.
Germanium (IV): The functional groups containing Bromine and Chlorine show cation retention capacity corresponding to alkaline and alkaline earths, at a slightly basic pH, and can allow the passage of the Ge⁺⁴ cation to the permeate under controlled conditions of pressure and pH. This phenomenon produced under the conditions described could be explained by electrostatic attraction effects between the Br and Cl of the functional groups and the monovalent and divalent cations present in the solution, which retains them close to the membrane, leaving the passage of tetravalent cations such as Germanium (IV) to the permeate.
Rubidium (I): Membranes functionalized with groups containing -OH, -OR, and -ROH radicals can retain the Rb⁺ cation in a certain proportion, probably by formation of ligand structures. In this case, and unlike the others, the separation of the analyte of interest is carried out by retention in the concentrate or rejection and requires a second separation by a simple electrodialysis process to eliminate the less volumetric cations that may have remained in the concentrate.
Cesium (I): Membranes functionalized with sulfonate, siloxane or aminosilane groups retain almost all cations (alkaline and alkaline earths) except for the largest by volume and allow only Cs⁺ to pass into the permeate (which has a greater ionic radius than the rest of the cations present) under controlled pressure and pH conditions.

**Table 3. Summary of selective separation of lithium, germanium, cesium and using the membranes of the present invention**

| **Functional membrane of the present invention** | | **Type of separation** | | | **Operational parameters** | | **Analytes Tested** | | | |
|---|---|---|---|---|---|---|---|---|---|---|
| **Organic compound** | **Polymer matrix** | **Selective permeation of the analyte of interest into the permeate (retention of interferents)** | **Selective retention of the analyte of interest by the membrane into the concentrate** | **P (10⁵ Pa)** | **pH** | **T^{a}** | **Li (I)** | **Ge (IV)** | **Rb (I)** | **Cs (I)** |
| 3-(acrylamidopropyl) trimethylammonium chloride | PA | x | | 4-25 | 8-10 | 20-45 | x | | | |
| | PES | x | | 4-25 | 8-10 | 25-50 | x | | | |
| | AcC | x | | 4-25 | 8-10 | 20-35 | x | | | |
| 2-hydroxyethylmethacrylate methacrylate | PA | | x | 25-50 | 7-8,5 | 20-45 | | | x | |
| | PES | | x | 25-50 | 7-8,2 | 25-50 | | | x | |
| | AcC | | x | 25-50 | 7-8,5 | 20-35 | | | x | |
| 2-acrylamido-2-methyl-1-propensulfonate | PA | x | | 20-55 | 7-8,2 | 20-45 | | | | x |
| | PES | x | | 20-55 | 7-8,2 | 25-50 | | | | x |
| | AcC | x | | 20-55 | 7-8,2 | 20-35 | | | | x |
| 3-(trimethoxysilyl) propyl methacrylate | PA | | x | 25-50 | 7-8,5 | 20-45 | | | x | |
| | PES | | x | 25-50 | 7-8,5 | 25-50 | | | x | |
| | AcC | | x | 25-50 | 7-8,5 | 20-35 | | | x | |
| N-hydroxyethylacrylamide | PA | | x | 25-50 | 7-8,5 | 20-45 | | | x | |
| | PES | | x | 25-50 | 7-8,5 | 25-50 | | | x | |
| | AcC | | x | 25-50 | 7-8,5 | 20-35 | | | x | |
| 2-acrylamido-2-methyl-2-methylpropanesulphonic acid | PA | x | | 20-55 | 7-8,2 | 20-45 | | | | x |
| | PES | x | | 20-55 | 7-8,2 | 25-50 | | | | x |
| | AcC | x | | 20-55 | 7-8,2 | 20-35 | | | | x |
| 2-(dimethylamino)ethyl 2-(dimethylamino)methacrylate | PA | x | | 4-25 | 8-10 | 20-45 | x | | | |
| | PES | x | | 4-25 | 8-10 | 25-50 | x | | | |
| | AcC | x | | 4-25 | 8-10 | 20-35 | x | | | |
| 2-hydroxyethyl acrylate | PA | | x | 25-50 | 7-8,5 | 20-45 | | | x | |
| | PES | | x | 25-50 | 7-8,5 | 25-50 | | | x | |
| | AcC | | x | 25-50 | 7-8,5 | 20-35 | | | x | |
| N,N dimethylaminoethyl acrylate | PA | x | | 4-25 | 8-10 | 20-45 | x | | | |
| | PES | x | | 4-25 | 8-10 | 25-50 | x | | | |
| | AcC | x | | 4-25 | 8-10 | 20-35 | x | | | |
| N-isopropylacrylamide | PA | x | | 4-25 | 7-10 | 20-45 | x | | | |
| | PES | x | | 4-25 | 7-10 | 25-50 | x | | | |
| | AcC | x | | 4-25 | 7-10 | 20-35 | x | | | |
| N-(3,3-(dimethylamino)propyl)methacryl amide | PA | x | | 4-25 | 7-10 | 20-45 | x | | | |
| | PES | x | | 4-25 | 7-10 | 25-50 | x | | | |
| | AcC | x | | 4-25 | 7-10 | 20-35 | x | | | |
| Aminoethylmethacrylate | PA | x | | 4-25 | 8-10 | 20-45 | x | | | |
| | PES | x | | 4-25 | 8-10 | 25-50 | x | | | |
| | AcC | x | | 4-25 | 8-10 | 20-35 | x | | | |
| Chloromethylstyrene | PA | x | | 15-40 | 6,8-8,2 | 20-45 | | x | | |
| | PES | x | | 15-40 | 6,8-8,2 | 25-50 | | x | | |
| | AcC | x | | 15-40 | 6,8-8,2 | 20-35 | | x | | |
| Sodium styrene sulphonate | PA | x | | 20-55 | 7-8,2 | 20-45 | | | | x |
| | PES | x | | 20-55 | 7-8,2 | 25-50 | | | | x |
| | AcC | x | | 20-55 | 7-8,2 | 20-35 | | | | x |
| Ethylenediamine | PA | x | | 4-25 | 8-10 | 20-45 | x | | | |
| | AcC | x | | 4-25 | 8-10 | 25-50 | x | | | |
| N-propylethylenediamine | PA | x | | 4-25 | 8-10 | 20-45 | x | | | |
| | AcC | x | | 4-25 | 8-10 | 25-50 | x | | | |
| Tris(2-aminoethyl)amine | PA | x | | 4-25 | 8-10 | 20-45 | x | | | |
| | AcC | x | | 4-25 | 8-10 | 25-50 | x | | | |
| p-anisidine | PA | | x | 25-50 | 7-8,5 | 20-45 | | | x | |
| | AcC | | x | 25-50 | 7-8,5 | 25-50 | | | x | |
| 4-aminoveratrol | PA | | x | 25-50 | 7-8,5 | 20-45 | | | x | |
| | AcC | | x | 25-50 | 7-8,5 | 25-50 | | | x | |
| Methyl 4-amino-2-methoxybenzoate | PA | | x | 25-50 | 7-8,5 | 20-45 | | | x | |
| | AcC | | x | 25-50 | 7-8,5 | 25-50 | | | x | |
| 2-bromo-5-nitroaniline | PA | x | | 15-40 | 6,8-8,2 | 20-45 | | x | | |
| | AcC | x | | 15-40 | 6,8-8,2 | 25-50 | | x | | |
| Methyl 2-amino-3,5-dibromobenzoate | PA | x | | 15-40 | 6,8-8,2 | 20-45 | | x | | |
| | AcC | x | | 15-40 | 6,8-8,2 | 25-50 | | x | | |
| 2,6-dinitroaniline | PA | x | | 4-25 | 8-10 | 20-45 | x | | | |
| | AcC | x | | 4-25 | 8-10 | 25-50 | x | | | |
| 2,4-dibromo-6-fluoroaniline | PA | x | | 15-40 | 6,8-8,2 | 20-45 | | x | | |
| | AcC | x | | 15-40 | 6,8-8,2 | 25-50 | | x | | |
| 4-bromo-2-methoxyaniline | PA | x | | 15-40 | 6,8-8,2 | 20-45 | | x | | |
| | AcC | x | | 15-40 | 6,8-8,2 | 25-50 | | x | | |
| Ethanolamine | PA | | x | 25-50 | 7-8,5 | 20-45 | | | x | |
| | AcC | | x | 25-50 | 7-8,5 | 25-50 | | | x | |
| 4-aminobenzoate | PA | | x | 25-50 | 7-8,5 | 20-45 | | | x | |
| | AcC | | x | 25-50 | 7-8,5 | 25-50 | | | x | |
| 4-((2-aminoethyl)benzenesulfonamide | PA | x | | 20-55 | 7-8,2 | 20-45 | | | | x |
| | AcC | x | | 20-55 | 7-8,2 | 25-50 | | | | x |
| Dibromoethane | PA | x | | 15-40 | 6,8-8,2 | 20-45 | | x | | |
| | PES | x | | 15-40 | 6,8-8,2 | 25-50 | | x | | |
| | AcC | x | | 15-40 | 6,8-8,2 | 20-35 | | x | | |
| Dichloroethane | PA | x | | 15-40 | 6,8-8,2 | 20-45 | | x | | |
| | PES | x | | 15-40 | 6,8-8,2 | 25-50 | | x | | |
| | AcC | x | | 15-40 | 6,8-8,2 | 20-35 | | x | | |
| Aminopropyltrimethoxysilane | PA | x | | 20-55 | 7-8,2 | 20-45 | | | | x |
| | AcC | x | | 20-55 | 7-8,2 | 25-50 | | | | x |
| Aminopropyltriethoxysilane | PA | x | | 20-55 | 7-8,2 | 20-45 | | | | x |
| | AcC | x | | 20-55 | 7-8,2 | 25-50 | | | | x |
| | PA | | x | 25-50 | 7-8,5 | 20-45 | | | x | |
| N-(2-aminoethyl)-3-aminopropyltrimethoxysilane | AcC | | x | 25-50 | 7-8,5 | 25-50 | | | x | |
| N-[3-(trimethoxysilyl)propyl]aniline | PA | x | | 20-55 | 7-8,2 | 20-45 | | | | x |
| | AcC | x | | 20-55 | 7-8,2 | 25-50 | | | | x |
| N,N'-dimethylacetamide | PA | | x | 25-50 | 7-8,5 | 20-45 | | | x | |
| | AcC | | x | 25-50 | 7-8,5 | 25-50 | | | x | |
| N,N-diethylacetamide | PA | | x | 25-50 | 7-8,5 | 20-45 | | | x | |
| | AcC | | x | 25-50 | 7-8,5 | 25-50 | | | x | |

| | | | | | | | | | | |
|---|---|---|---|---|---|---|---|---|---|---|
| - PA= polyamide; - PES= polyethersulphone; - AcC= cellulose acetate; - X= successful; - Blank= Not successful. | | | | | | | | | | |

### REFERENCES

[1] Jones, E., Qadir, M., van Vliet, M. T., Smakhtin, V., & Kang, S. M. (2019). The state of desalination and brine production: A global outlook. Science of the Total Environment, 657, 1343-1356.
[2] Loganathan, P., Naidu, G., & Vigneswaran, S. (2017). Mining valuable minerals from seawater: a critical review. Environmental Science: Water Research & Technology, 3(1), 37-53.
[3] Naidu, G., Jeong, S., Johir, M. A. H., Fane, A. G., Kandasamy, J., & Vigneswaran, S. (2017). Rubidium extraction from seawater brine by an integrated membrane distillation-selective sorption system. Water research, 123, 321-331.
[4] Kumar, A., Naidu, G., Fukuda, H., Du, F., Vigneswaran, S., Drioli, E., & Lienhard, J. H. (2021). Metals recovery from seawater desalination brines: technologies, opportunities, and challenges. ACS Sustainable Chemistry & Engineering, 9(23), 7704-7712.

## Claims

1. A functional membrane **characterised in that** it comprises a polymer matrix functionalized with an organic compound selected from the group consisting of acrylates, methacrylates, acrylamide, methacrylamide, styrenes, amines, alkyl halides, aminosilanes and amides.

2. The functional membrane according to claim 1, wherein the polymer matrix is selected from the group consisting of polyamide, polyethersulphone and cellulose acetate.

3. The functional membrane according to claim 1 or 2, wherein the organic compound is selected from the group consisting of 3-(acrylamidopropyl) trimethylammonium chloride, 2-hydroxyethylmethacrylate methacrylate, 2-acrylamido-2-methyl-1-propensulfonate, 3-(trimethoxysilyl) propyl methacrylate, N-hydroxyethylacrylamide, 2-acrylamido-2-methyl-2-methylpropanesulfonic acid, 2-(dimethylamino)ethyl 2-(dimethylamino)methacrylate, 2-hydroxyethyl acrylate, N,N dimethylaminoethyl acrylate, N-isopropylacrylamide, N-(3-(3-(dimethylamino)propyl)methacrylamide, aminoethylmethacrylate, chloromethylstyrene, sodium styrene sulphonate, ethylenediamine, N-propylethylenediamine, tris(2-aminoethyl)amine, p-anisidine, 4-aminoveratrol, methyl 4-amino-2-methoxybenzoate, 2-bromo-5-nitroaniline, methyl 2-amino-3,5-dibromobenzoate, 2,6-dinitroaniline, 2,4-dibromo-6-fluoroaniline, 4-bromo-2-methoxyaniline, ethanolamine, 4-aminobenzoate, 4-(2-(2-aminoethyl)benzenesulfonamide, dibromoethane, dichloroethane, aminopropyltrimethoxysilane, aminopropyltrimethoxysilane, aminopropyltriethoxysilane, N-(2-aminoethyl)-3-aminopropyltrimethoxysilane, N-[3-(trimethoxysilyl)propyl]aniline, N,N'-dimethylacetamide and N,N-diethylacetamide.

4. A process for manufacturing afunctional membrane according to anyone of claims 1 to 3, comprising the following steps:
a) preparing a mixture of a solvent and a compound selected from the group consisting of acrylates, methacrylates, acrylamide, methacrylamide, styrenes, amines, alkyl halides, aminosilanes and amides;
b) providing a polymer matrix and spraying the mixture from step a) into the surface of the polymer matrix; and
c) subjecting the product obtained in step b) to a nucleophilic substitution reaction or a radical polymerisation reaction at a temperature between 50°C and 80°C for 2 to 24 hours to obtain a functionalised membrane.

5. The process according to claim 4, wherein the reaction of step c) is a radical polymerisation reaction and the mixture of step a) further comprises an initiator.

6. The process according to claim 5, wherein the initiator is azobisisobutyronitrile.

7. The process according to anyone of claims 4 to 6, wherein the polymer matrix is selected from the group consisting of polyamide, polyethersulphone and cellulose acetate.

8. The process according to anyone of claims 4 to 7, wherein the solvent: organic compound ratio is from 2:1 to 4:1.

9. A process for selective separation of analytes in a fluid, comprising the step of contacting a fluid comprising analytes selected from the group consisting of metals, metal-based compounds and/or metal ions with a membrane according to claims 1 to 3.

10. The process according to claim 9, wherein the metal is lithium, germanium, rubidium or cesium.

11. The process according to claim 9, wherein the fluid is groundwater, surface water, freshwater, seawater, wastewater, well water, mining water or brackish water.

12. A filtration element, membrane module or filtration system comprising a membrane according to any one of claims 1 to 3.

13. Use of a membrane according to any one of claims 1 to 3 for drinking water purification, treatment of industrial or municipal wastewater, in the desalination of sea or brackish water purification.
